# EUROPEAN PATENT APPLICATION

(11) **EP 2 770 422 A2**
(43) Date of publication of application: **27.08.2014**
(21) Application number: 14155917.9
(22) Date of filing: 20.02.2014
(51) Int. Cl.: G06F 3/0488, G06F 3/01

(54) **Method for providing a feedback in response to a user input and a terminal implementing the same**

(30) Priority: 23.02.2013 KR 20130019527
(71) Applicant: Samsung Electronics Co., Ltd., Suwon-si Gyeonggi-do 443-742 (KR)
(72) Inventor: Kim, Jinyong, 443-742 Gyeonggi-do (KR); Kang, Jiyoung, 443-742 Gyeonggi-do (KR); Kim, Daesung, 443-742 Gyeonggi-do (KR); Lee, Boyoung, 443-742 Gyeonggi-do (KR); Lim, Seungkyung, 443-742 Gyeonggi-do (KR); Jeon, Jinyoung, 443-742 Gyeonggi-do (KR)
(74) Representative: Gover, Richard Paul

(57) **Abstract**

A method and a terminal for providing a feedback in response to a user input related to a touch panel are provided. The method includes displaying an object on the screen or displaying an image overlying the object, detecting hovering of a touch input means, the hovering being associated with the object and providing visual feedback in response to the hovering. Wherein when an object is displayed on the screen the visual feedback corresponds to a distance between the object and the touch input means or a function corresponding to the object. Wherein when an image is displayed overlying the object the visual feedback comprises displaying the object on the image.

## Description

### TECHNICAL FIELD

The present invention relates to a method for providing feedback in response to a user input related to a touch panel, and a terminal implementing the same.

### BACKGROUND

Currently, terminals, such as smart phones and tablet PCs, are generally equipped with a touch panel. The terminal displays objects on a screen and when a user touches a certain object among the displayed objects, the terminal detects a user touch from the touch panel, and may perform a corresponding function in response to the touch. For example, when a certain text is touched in a webpage, another webpage that is linked to the text may be displayed on the screen.

There is a need for an improved method for providing visual feedback in response to hovering of the touch input means, the hovering being related to (or associated with) an object, and a terminal implementing the same.

The above information is presented as background information only to assist with an understanding of the present invention. No determination has been made, and no assertion is made, as to whether any of the above might be applicable as prior art with regard to the present invention.

### SUMMARY

Currently, in the relater art, a visual effect for an object before touch is not provided. Therefore, when the objects are packed densely, it may be difficult to select an object that user needs. That is, it may cause a problem that a function is executed when an unintended object is touched by the user. In addition, the user may not know which function is related to the object. In this case, the corresponding function may not be executed until the user recognizes which function is related to the object. Meanwhile, other objects may be displayed on the object. For example, an electronic document may be displayed on a webpage. That is, a certain object of the webpage may not be displayed due to the electronic document. Thus, a certain object may not be executed until a display of the electronic document is terminated.

It is an aim of certain embodiments of the present invention to provide a method for providing a visual feedback in response to a hovering of the touch input means (e.g., a finger or a pen) related to an object, and a terminal implementing the same.

According to a first aspect of the present invention there is provided a method for providing feedback in a terminal including a touch panel installed on a screen, the method comprising: displaying an object on the screen or displaying an image overlying the object; detecting hovering of a touch input means, the hovering being associated with the object; and providing visual feedback in response to the hovering; wherein when an object is displayed on the screen the visual feedback corresponds to a distance between the object and the touch input means or a function corresponding to the object; or wherein when an image is displayed overlying the object the visual feedback comprises displaying the object on the image.

According to a second aspect of the present invention there is provided a terminal comprising: a display unit having a screen configured to display an object or an image overlying the object; a touch panel installed on the screen; and a controller configured to control the display unit and the touch panel; wherein the controller is configured to: control the touch panel to detect hovering of a touch input means, the hovering being associated with the object; and provide visual feedback in response to the hovering; wherein when an object is displayed on the screen the visual feedback corresponds to a distance between the object and the touch input means or a function corresponding to the object; or wherein when an image is displayed overlying the object the visual feedback comprises displaying the object on the image.

In accordance with an embodiment of the present invention, a method for providing a feedback is provided. The method includes detecting a hovering of a touch input means with respect to the object, and providing a visual feedback corresponding to a distance between the object and the touch input means in response to the hovering.

In accordance with another embodiment of the present invention, a method for providing a feedback is provided. The method includes displaying an object on the screen, detecting a hovering of a touch input means with respect to the object, and providing a visual feedback related to a function corresponding to the object in response to the hovering.

In accordance with another embodiment of the present invention, a method for providing a feedback is provided. The method includes displaying an image on an object, detecting a hovering of a touch input means with respect to the object, displaying the object on the image in response to the hovering, detecting a touch gesture of the touch input means corresponding to the object in a state in which the object is displayed on the image, and performing a function of the object in response to the touch gesture.

In accordance with another embodiment of the present invention, a terminal is provided. The terminal includes a display unit configured to display an object on a screen, a touch panel installed on a screen of the display unit, and a controller configured to control the display unit and the touch panel, wherein the controller controls the display unit to detect a hovering of the touch input means corresponding to the object from the touch panel, and provides a visual feedback corresponding to a distance between the object and the touch input means in response to the hovering.

In accordance with another embodiment of the present invention, a terminal is provided. The terminal includes a display unit configured to display an object on a screen, a touch panel installed on the screen of the display unit, and a controller configured to control the display unit and the touch panel, wherein the controller detects a hovering of a touch input means corresponding to the object from the touch panel, and provides a visual feedback related to a function corresponding to the object in response to the hovering.

In accordance with another embodiment of the present invention, a terminal is provided. The terminal includes a display unit configured to display an image on an object, a touch panel installed on a screen of the display unit, and a controller configured to control the display unit and the touch panel, wherein the controller detects a hovering of a touch input means corresponding to the object from the touch panel, and controls the object displayed on the image in response to the hovering.

Another aspect of the invention provides a computer program comprising instructions arranged, when executed, to implement a method in accordance with any one of the above-described aspects. A further aspect provides machine-readable storage storing such a program.

Other aspects, advantages, and salient features of the invention will become apparent to those skilled in the art from the following detailed description, which, taken in conjunction with the annexed drawings, discloses various embodiments of the present invention.

### BRIEF DESCRIPTION OF THE DRAWINGS

The above and other aspects, features, and advantages of certain embodiments of the present invention will be more apparent from the following description taken in conjunction with the accompanying drawings, in which:
FIG. 1 is a block diagram of a portable terminal according to an embodiment of the present invention;
FIG. 2 is a flowchart explaining a method for providing a visual effect according to a depth value according to an embodiment of the present invention;
FIGS. 3A, 3B, 3C, 3D,and 3E are screens explaining a method for providing a visual effect according to a depth value according to an embodiment of the present invention;
FIG. 4 is a flowchart explaining a method for providing a visual hint related to an interactive object according to an embodiment of the present invention;
FIGS. 5A, 5B,and 5C are screens illustrating examples of a method for providing a visual hint according to an embodiment of the present invention;
FIGS. 6A, 6B, 6C,and 6D are screens illustrating another examples of a method for providing a visual hint according to an embodiment of the present invention;
FIGS. 7A, 7B,and 7C are screens illustrating another examples of a method for providing a visual hint according to an embodiment of the present invention;
FIG. 8 is a screen explaining another example of a method for providing a visual hint according to an embodiment of the present invention;
FIG. 9 is a flowchart explaining a method for providing a visual information related to a hidden interactive object according to an embodiment of the present invention; and
FIGS. 10A, 10B, and 10C are screens explaining examples of a method for providing visual information according to an embodiment of the present invention.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present invention as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope of the present invention as defined by the appended claims. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present invention. Accordingly, it should be apparent to those skilled in the art that the following description of various embodiments of the present invention is provided for illustration purpose only and not for the purpose of limiting the present invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Throughout the description and claims of this specification, the words "comprise" and "contain" and variations of the words, for example "comprising" and "comprises", means "including but not limited to", and is not intended to (and does not) exclude other components, integers or steps.

Features, integers or characteristics described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

A terminal according to the present invention has a touch panel. In addition, the terminal according to the present invention may be a portable terminal, or a terminal that is installed in a vehicle, or a computer that is for business or home use. Specifically, the terminal according to the present invention may be a smart phone, a tablet PC, a notebook PC, a digital camera, a Personal Digital Assistant (PDA), a Portable Multimedia Player (PMP), a media player (for example, a MP3 player), a navigation terminal, and a desktop PC, and the like. In addition, the terminal according to the present invention may be a display unit and a touch panel installed in the display unit, and a home appliances (e.g., refrigerator, a TV, a washing machine) having a controller controlling thereof.

When the touch input means (e.g., a pen point, a fingertip, a capacitive touch pen, an electromagnetic touch pen, and the like.) approaches, for example, within 10 cm on the screen, the terminal may detect a proximity of the touch input means. For example, when a distance (e.g., a depth) between these two is within 5 cm, the terminal may detect a movement and a direction of the touch input means. For example, when a distance between these two is less than 3 cm, the terminal can detect a position of the touch input means. Likewise, the distance between the touch input means and the screen may be named as a hovering when the touch input means approaches to a level where the terminal can detect the position of the touch input means. Here, 3cm is just one of values, and the detection of hovering is not defined by this value. For example, the value may be influenced according to a performance of the terminal.

The terminal according to the present invention may provide a visual feedback in response to the hovering. An auditory feedback (e.g., a voice) and a tactile feedback (e.g., a vibration of a terminal) as well as the visual feedback may be provided by the terminal. The visual feedback may be referred to as visual information, a visual content, a visual effect, and a visual hint, and the like. The auditory feedback may be referred to as auditory information, an auditory content, an auditory effect, and an auditory hint, and the like. The tactile feedback may be referred to as tactile information, a tactile content, a tactile effect, a haptic effect, and the like.

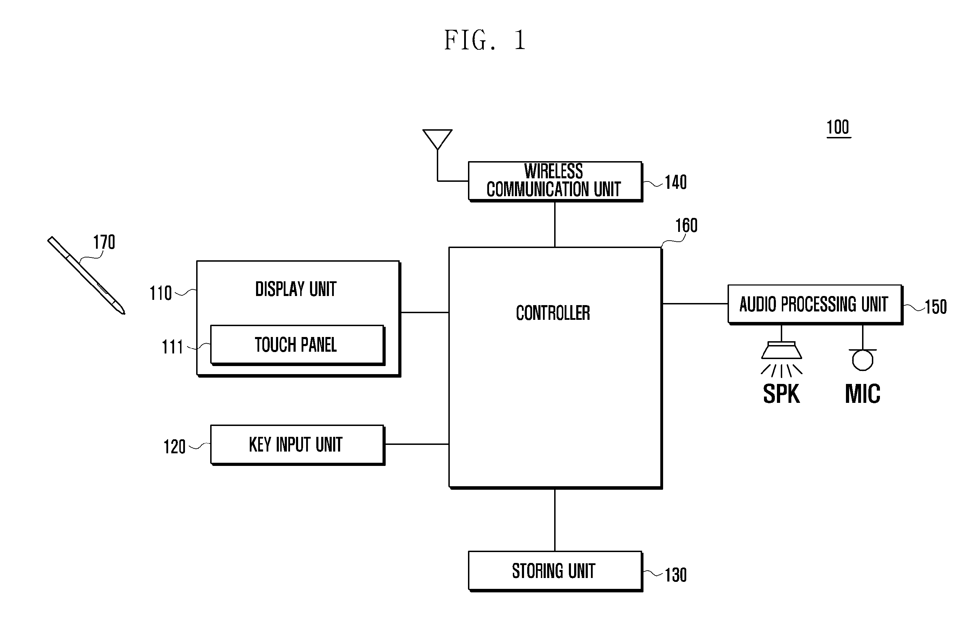

FIG. 1 is a block diagram of a portable terminal according to an embodiment of the present invention.

Referring to FIG. 1, the portable terminal 100 according to an embodiment of the present invention may include a display unit 110, a key input unit 120, a storing unit 130, a wireless communication unit 140, an audio processing unit 150, a Speaker (SPK), a Microphone (MIC), a controller 160, and a pen 170.

The display unit 110 may display a data on a screen under the control of the controller 160. That is, when the controller 160 processes (e.g., a decoding) the data and stores the data in a buffer, the display unit 110 converts the data stored in the buffer into an analog signal and display the data on the screen. When a power is supplied to the display unit 110, the display unit 110 may display a lock image on the screen. When unlock information is detected in a state in which the lock image is displayed, the controller 160 may release the lock. The display unit 110 may display an indicator instead of the lock image on an upper part of the screen, and may display a home image on the bottom of the screen under the control of the controller 160. The indicator is an image to guide a use state of the portable terminal 100, for example, a 3G connection status, a battery level, a current time, and a Wi-Fi connection status to the user. When the user touches the indicator and drags the indicator down in such a state, the controller 160 may extend an area of the indicator in response to the drag. The additional information such as a reception message, the weather, the stock information, and a temperature may be displayed on an extended area. The home image may include a background image (e.g., a photo set by the user) and a plurality of icons displayed on the background image. Here, the icons may indicate each application or the content (e.g., a photo file, a video file, a recording file, a document, a message, and the like.). When one of the icons, for example, an application icon is selected by the user, the controller 160 may execute the corresponding application. The display unit 110 may receive an execution image of the application from the controller 160 to output by converting into an analog signal.

The display unit 110 may display the images on the screen as a multi-layer structure under the control of the controller 160. For example, the display unit 110 may display a photo on the indicator and the home image.

The display unit 110 may be configured with a Liquid Crystal Display (LCD), an Active Matrix Organic Light Emitted Diode (AMOLED), a Flexible display, or a transparent display.

A touch panel 111 is installed on a screen of the display unit 110. In detail, the touch panel 111 may be implemented as an add-on type positioned on the screen of the display unit 110, or as an on-cell type or an in-cell type that is inserted within the display unit 110.

The touch panel 111 may generate an event in response to a user gesture for the screen, and deliver to the controller 160, by Analog to Digital (A/D) conversion, the event. Here, the event may be an access event, a hovering event, or a touch event.

When the touch input means approaches the screen, the touch panel 111 may generate the access event in response to the approach of the touch input means. The access event may include information indicating a movement and a direction of the touch input means.

When the touch input means is hovering in proximity to the screen, the touch panel 111 may generate the hovering event in response to the hovering. The hovering event may include one or more hovering coordinates (x, y). For example, a touch Integrated Circuit (IC) of the touch panel 111 may detect the hovering, determine a hovering area on the screen in response to the hovering, and may deliver the coordinate (x, y) that is included in the hovering area to the controller 160. Here, the hovering coordinate may be a pixel unit. For example, when a resolution of the screen is 640 (the number of horizontal pixels)*480 (the number of vertical pixels), an X-axis coordinate is (0, 640), and a Y-axis coordinate is (0, 480). When the hovering coordinate is received from the touch panel 111, the controller 160 may determine that the touch input means is hovering in proximity to the touch panel 111, and when the hovering coordinate is not received from the touch panel 111, the controller 160 may determine that the hovering of the touch input means is being released. In addition, the hovering event may include the detecting of information to calculate a depth value. For example, the hovering coordinate may be (x, y, z). That is, z value refers to the depth value.

When the touch input means touches the screen, the touch panel 110 may generate the touch event in response to the touch. Here, the touch event may include one or more of a touch coordinates (x, y). For example, a touch Integrated Circuit (IC) of the touch panel 111 may detect a user touch, may determine a touch area in response to the touch, and may deliver a touch coordinate (x, y) included in the touch area to the controller 160. Here, the touch coordinate may be a pixel unit. When the touch coordinate is received from the touch panel 111, the controller 160 may determine that the touch input means is touching the touch panel 111. When the touch coordinate is not received from the touch panel, the controller 160 may determine that the touch of the touch input means is being released. In addition, when the touch coordinate is changed, and the touch coordinate's variation exceeds a preset movement threshold, the controller 160 may generate the movement of the touch input means. The controller 160 may calculate a position variation (dx, dy) of the touch input means and a movement speed of the touch input means in response to the movement of the touch input means. The controller 160 may determine a user gesture related to the screen as any one of a touch, a multi touch, a tap, a double tap, a long tap, a tap & touch, a drag, a flick, a press, a pinch in, or a pinch out based on the touch coordinate, the touch release of the touch input means, the movement of the touch input means, and the position variation of the touch input means, and the movement speed of the touch input means.

The touch panel 111 may be a complex touch panel configured with a finger touch panel detecting a hand gesture and a pen touch panel detecting a pen gesture. Here, the hand touch panel may be implemented by a capacitive type. Of course, the hand touch panel may also be implemented by a resistive type, an infrared type, or an ultrasonic type. In addition, the hand touch panel may generate the event not only by the hand gesture, but also generate the event by other physical solid (e.g., a conductive material physical solid that may cause a capacitive change). The pen touch panel may be configured with an electromagnetic induction type. Accordingly, the pen touch panel may generate the event by specially designed touch pen to form a magnetic field. The pen touch panel may generate a key event. For example, when a key installed in the pen is pressed, the magnetic field generated from a coil of the pen may be changed. The pen touch panel may generate the key event in response to the change of the magnetic field, and may deliver to the controller 160.

The key input unit 120 may include at least one touch key. The touch key may be implemented by a capacitive type or a resistive type to detect a user touch. The touch key may generate the event in response to the user touch, and may deliver to the controller 160. In addition, the touch key may be installed adjacent to the screen (e.g., bottom of the screen). Furthermore, the key input unit 120 may include another type of key in addition to the touch type. For example, the key input unit 120 may include a home key of a dome key type. When the user presses the home key, the home key may be changed to be contacted to a printed circuit board, and thus, the key event may be generated from the printed circuit board to deliver to the controller 160.

The storing unit (secondary memory unit: 130) may be a disc, a RAM, a ROM, or a flash memory, and the like. The storing unit 130 may store a data generated from the portable terminal 100, or received from an external devices (e.g., a server, a desktop PC, and a tablet PC) through the wireless communication unit 140 under the control of the controller 160. In addition, the storing unit 130 may temporarily store a data copied from a message, a photo, a webpage, or a document by the user in order to copy & paste. Furthermore, the storing unit 130 may store various set values (e.g., a brightness of the screen, a vibration in the touch generation, an automatic rotation of the screen, and the like.) for an operation of the portable terminal 100.

The storing unit 130 may store a booting program, one or more operating systems, and applications. The operating system serves as an interface between hardware and an application, and between the applications, and may manage a computer resources such as a Central Processing Units (CPU), Graphic Processing Units (GPU), a main memory, and a storing unit 130, and the like. The applications may be categorized by an embedded application and a 3rd party application. For example, the embedded application may be a Web browser, an email program, and an instant messenger, and the like.

The wireless communication unit 140 may perform a voice call, a video call, or a data communication with an external device through a network under the control of the controller 160. The wireless communication unit may include a radio frequency transmission unit that performs up conversion and amplification of a frequency of the transmitted signal, and a radio frequency reception unit that performs low noise amplification and down conversion of a frequency of a received signal. In addition, the wireless communication unit 130 may include a mobile communication module (e.g., 3-Generation mobile communication module, 3.5-Generation mobile communication module, or 4-Generation mobile communication module, and the like.), a Digital Broadcasting Module (e.g., DMB module), and a local communication module (e.g., a Wi-Fi module, a Bluetooth module, a Near Field Communication module).

The audio processing unit 150 may perform an input and an output of an audio signal (e.g., a voice data) for voice recognition, a voice recording, a digital recording, and a phone call by combining to a SPK and a MIC. The audio processing unit 150 may receive the audio signal from the controller 160, and may output the received audio signal to the SPK after performing Digital to Analog (D/A) conversion and amplifying thereof. The SPK may convert the signal received from the audio processing unit 150 to a sound wave and output. Meanwhile, the portable terminal 100 may be equipped with a plurality of speakers. For example, a first speaker is used for call, and may be named as a receiver. That is, the first speaker is used when a user calls while holding the portable terminal 100 near an ear. A second speaker is used for play of data such as music and video as well as call, and named as a loud speaker. The MIC converts a sound wave delivered from a person or other sound sources into the audio signal. The audio processing unit 150 may deliver the audio signal received from the MIC to the controller 160 after performing an Analog to Digital (A/D) conversion.

The controller 160 may control an overall operation of the portable terminal 100 and a signal flow between the internal configurations of the portable terminal 100, perform a function processing a data, and control a power supply to the configurations from a battery.

The controller 160 may include one or more Central Processing Units (CPU). As is well known, the CPU is an essential control unit of the computer system that performs a calculation and a comparison of a data, and an interpretation and an execution of an instruction. The CUP may include various registers that stores the data and the instruction temporarily. The controller 160 may include one or more Graphic Processing Units (GPU). The GPU is a graphic control unit that performs a calculation and a comparison of a data related to the graphic and an interpretation and an execution of an instruction, on behalf of the CPU. The CUP and the GPU may be integrated into one package in which two or more independent cores (e.g., a quad-core) are consisted as a single integrated circuit. That is, the CPUs may be integrated as one multi core processor. In addition, a plurality of GPUs may also be integrated as one multi core processor. Further, the CPU and the GPU may be integrated as one chip (System on Chip: SoC). Furthermore, the CPU and the GPU may be packaged with a multi-layer. Meanwhile, an Application Processor (AP) may include the CPU and the GPU. Furthermore, the AP may further include an Image Signal Processor (ISP).

The controller 160 may include a main memory unit, for example, a RAM. The main memory may store various programs, for example, a booting program, an operating system, and applications loaded from the storing unit 130. When a power of the battery is supplied to the controller 160, first, the booting program is loaded to the main memory unit of the controller 160. Such booting program may load the operating system to the main memory unit. The operating system may load the applications to the main memory. The controller 160 (e.g., AP) may decode the program instruction by the approaching of the touch input means to an object associated with such program, and execute a function (e.g., provide a feedback in response to a hovering) according to the decoding result. In addition, the controller 160 may temporarily store a data to be written in the storing unit 130, and include a cache memory which temporarily stores a data read from the storing unit 130.

A pen 170 is an accessory of the portable terminal 100 that is detachable from the portable terminal, and may include a pen point placed at the end of a penholder, a coil that is placed inside of the penholder adjacent to the pen point and generates a magnetic field, and a button to change a magnetic field. The coil of the pen 170 may form the magnetic field around the pen point. The touch panel 111 may detect the magnetic field, and may generate the event corresponding to the magnetic field.

Meanwhile, the portable terminal 100 may further include the configurations which were not described above such as an ear jack, a vibration motor, a camera, an acceleration sensor, a proximity sensor, an illuminance sensor, a GSP receiving unit, and an accessory. Here, the accessory is an accessory of the portable terminal 100 which is detachable from the portable terminal 100, and may be a pen 170.

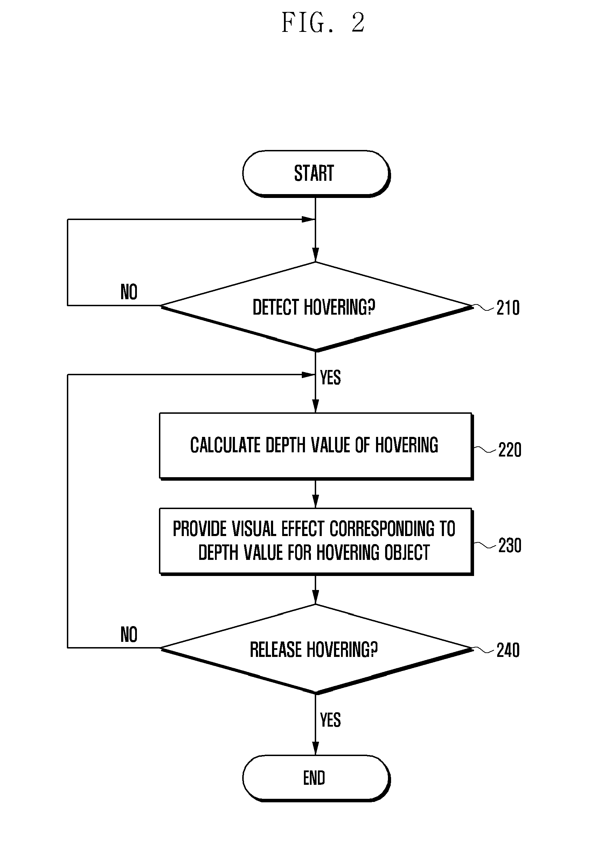

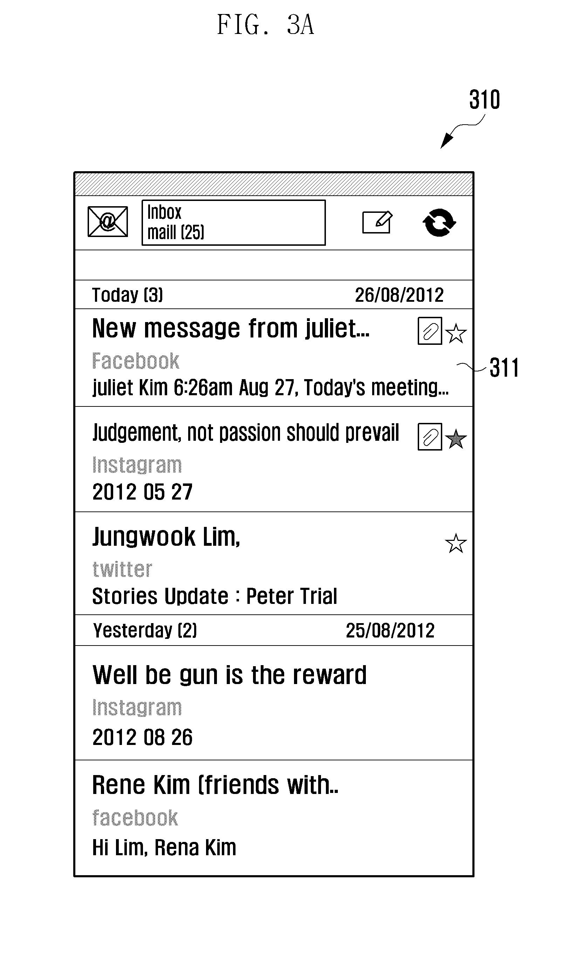

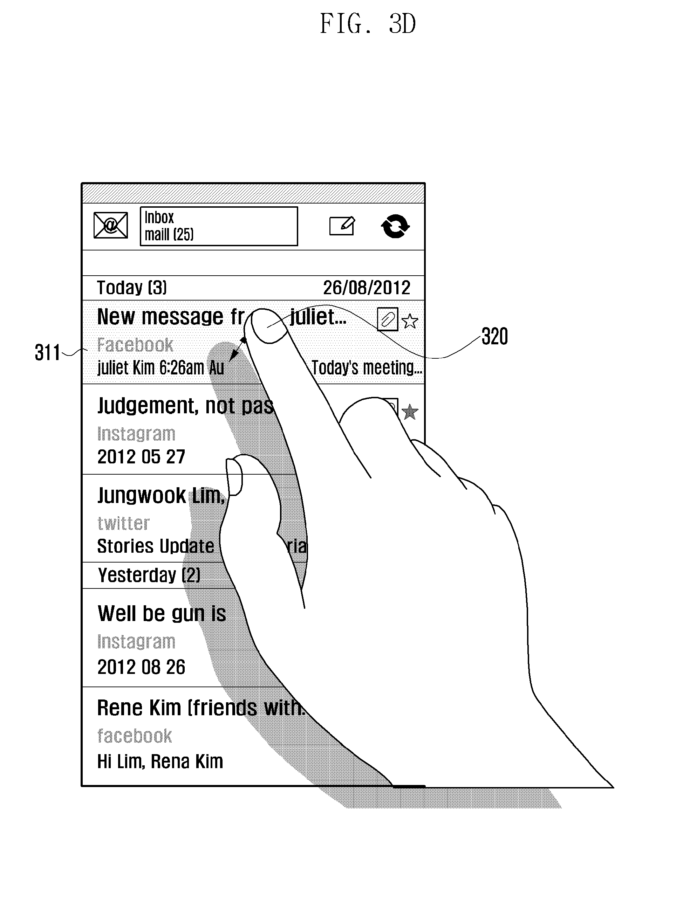

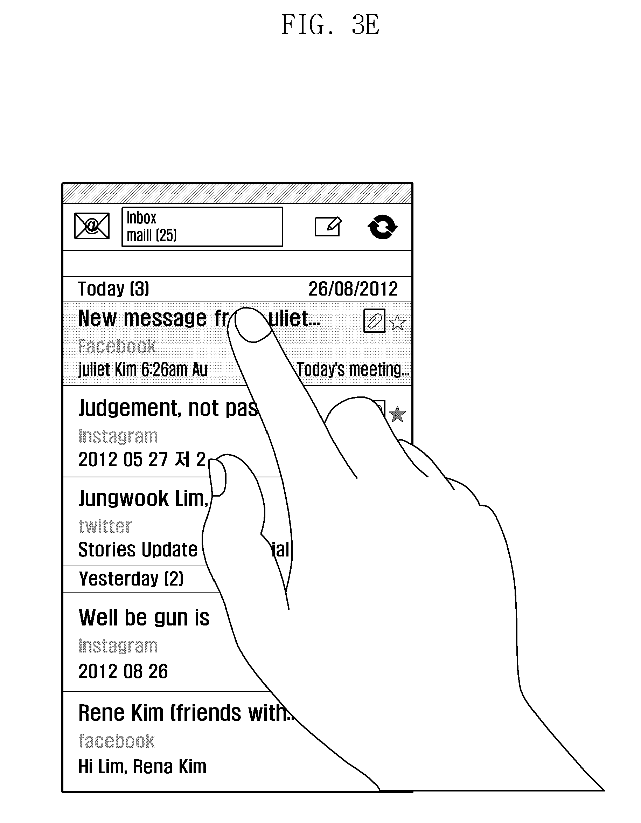

FIG. 2 is a flowchart explaining a method for providing a visual effect according to a depth value according to an embodiment of the present invention. FIGS. 3A to 3E are screens explaining a method for providing a visual effect according to a depth value according to an embodiment of the present invention;

Referring to FIG. 2, the controller 160 may determine whether a hovering is detected at operation 210. When the hovering is detected, the controller 160 may calculate a depth value of the hovering at operation 220. The controller 160 may provide a visual effect corresponding to the depth value of the hovering object at operation 230. The controller 160 may determine whether the hovering is released at operation 240. The controller 160 may terminate a provision of the visual effect when the hovering is released, otherwise, returns to operation 220. The detailed example of the method for providing a visual effect according to the depth value is as follows.

Referring to FIG. 3A, the display unit 110 may display a message list 310 including a first item 311 on a screen under the control of the controller 160.

A hand of a user may approach in proximity to the screen. In response to this approach, the touch panel 111 may generate an access event and deliver the access event to the controller 160. Accordingly, the controller 160 may recognize that something has approached in proximity to the screen.

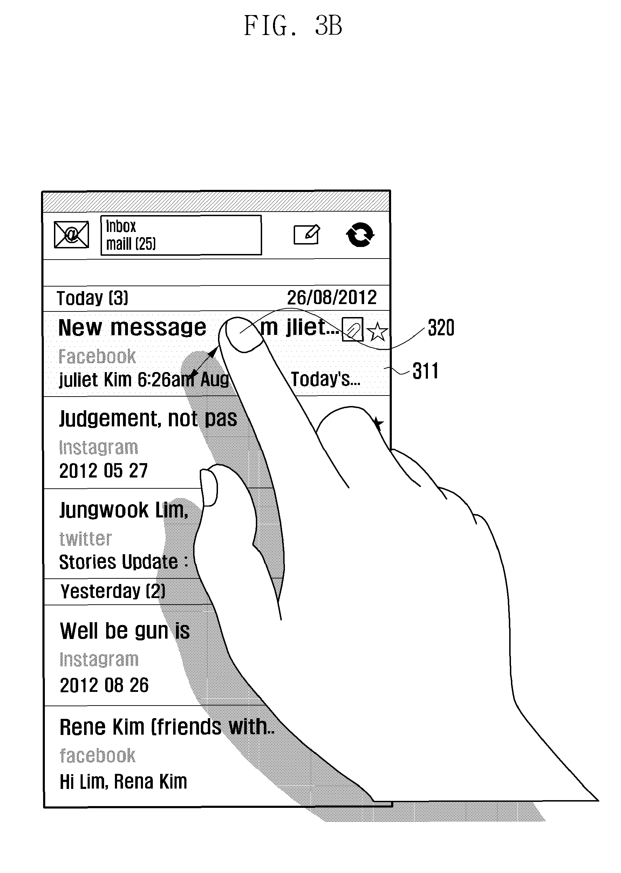

Referring to FIG. 3B, the user's hand may further approach in proximity to the screen. For example, the user's index finger 320 may approach in proximity to a first item 311. In response to this, the touch panel 11 may generate the hovering event. The touch panel 111 may deliver the hovering event to the controller 160, and the controller 160 may recognize that the object associated with the hovering is the first item 311. When the object associated with the hovering is recognized, the controller 160 may calculate a first depth value. The controller 160 may verify a first luminosity related to the first depth value in a look-up table. Here, the look-up table may be stored in the storing unit 130. The controller 160 may control the display unit to display a background colour of the first item 311 having the first luminosity.

Referring to FIGS. 3A and 3B, when the index finger 320 does not approach in proximity to the first item 311, the background colour of the first item 311 may be identical to other items. However, when the index finger 320 approaches in proximity to the first item 311, the background colour of the first item 311 becomes bolder than other items.

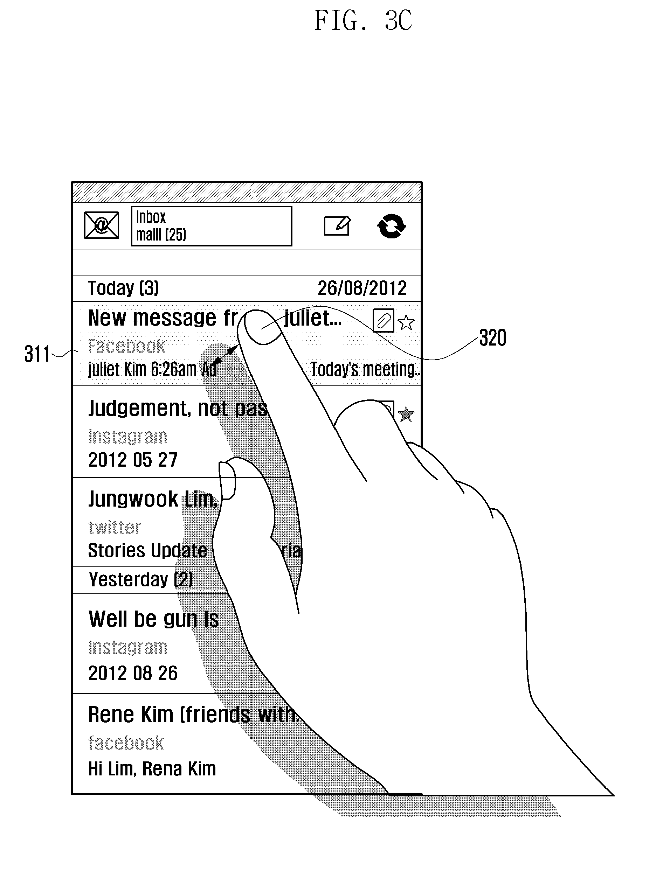

Referring to FIG. 3C, when the background colour of the first item 311 becomes bolder, the user may make the index finger 320 further approach in proximity to the first item 311. A second depth value that is smaller than the first depth value may be calculated. Likewise, when the depth value is changed, the controller 160 may verify a second luminosity corresponding to the second depth value in the look-up table. After that, the controller 160 may control the display unit 110 to display the background colour of the first item 311 having the second luminosity. Accordingly, the background colour of the first item 311 becomes bolder.

Referring to FIGS. 3A to 3E, as the user's index finger 320 approaches in proximity to the first item 311, the background colour of the first item 311 may become increasingly bolder. When the user touches the first item 311, the background colour of the first item may become the boldest.

When the user releases a touch in the first item 311, the controller 160 may control the display unit 110 to display a detailed content of the first item 311 in response to the touch release. As the index finger 320 gets farther away from the first item 311, the background colour of the first item 311 becomes lighter. When the hovering is released from the first item 311, the background colour of a fist message 311 becomes identical to other items.

Meanwhile, the "luminosity" as described above is just only one of the properties of the corresponding object, and the "luminosity" does not limit the technological concept of the present invention. That is, besides the luminosity, a colour, a brightness, a size (e.g., a size of a letter included in the object), and a shape (e.g., a shape of a letter included in the object) may be changed.

In addition, an "item" in the above is one example of the object, and it does not limit the technological concept of the present invention. That is, the object is displayed on the screen and provides information to the user, and may be a message, a text, an image, an icon, a thumbnail, a photo, a tool bar, a check box, a widget, a webpage, a page of an electronic book, a key or a menu, and the like., in addition to the item.

In addition, an effect in the above example may include an auditory effect or a tactile effect besides the visual effect. For example, when the hovering is detected, the controller 160 may control the audio processing unit 150 so that a first sound effect may be output. In addition, when a touch is detected, the controller 160 may control the audio processing unit 150 so that a second sound effect may be output. Further, when the touch is detected, the controller 160 may vibrate a vibration motor.

In addition, the touch input means in the above is exemplified with a user's index finger, however, other physical solid, for example, a pen (e.g., a capacitive touch pen, an electromagnetic touch pen) may also be the touch input means.

Further, in the above, when the detected hovering is a single hovering (e.g., hovering over or associated with an object by only one finger) and a multi hovering (e.g., hovering over or associated with one object with two or more fingers or hovering over or associated with different objects with two or more fingers respectively), the visual effect may be different. For example, when a single object is associated with multi hovering, the single object may be displayed further bolder than in relation to single hovering. In addition, the present hovering technology is able to detect a finger type. Hence, an object associated with hovering using a thumb, and an object associated with hovering using an index finger may be displayed differently.

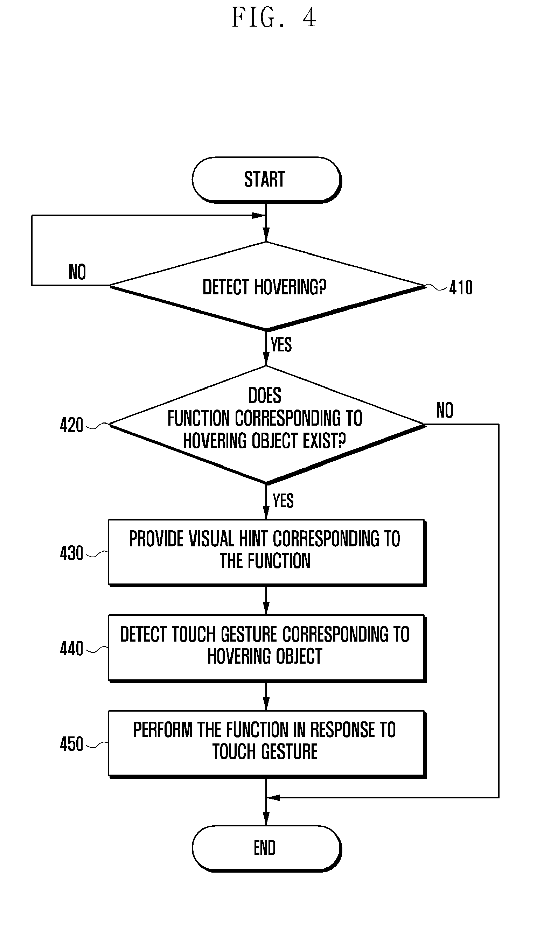

FIG. 4 is a flowchart explaining a method for providing a visual hint related to an interactive object according to an embodiment of the present invention.

Here, the interactive object refers to an object which is able to perform an interaction with a user. For example, when an application icon is selected, the controller 160 may execute the corresponding application in response to this. Therefore, the application icon corresponds to the interactive object. In addition, when a photo is selected, the controller 160 may control the display unit 110 to display the tag information tagged in the photo, for example, photograph date, a photograph place, other photograph information, a contact number, and a person's name in response to the photo selection. Therefore, the photo in which the tag information is tagged may correspond to the interactive object. Beside this, various interactive objects may include a keypad, an indicator, a webpage, and the like.

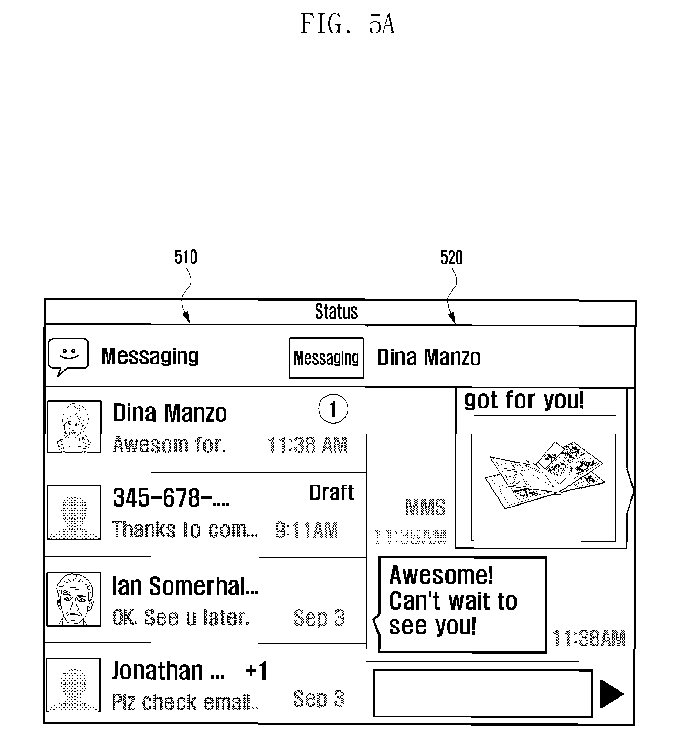

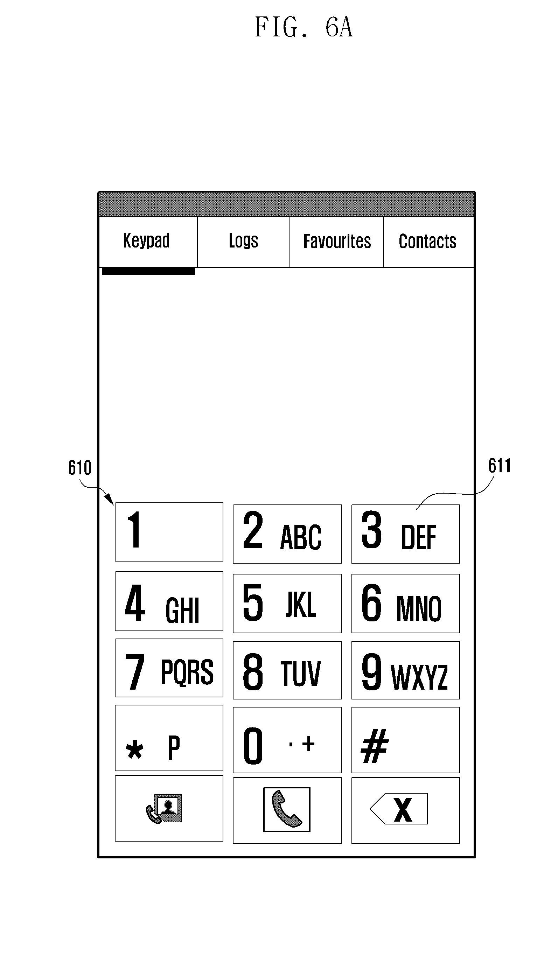

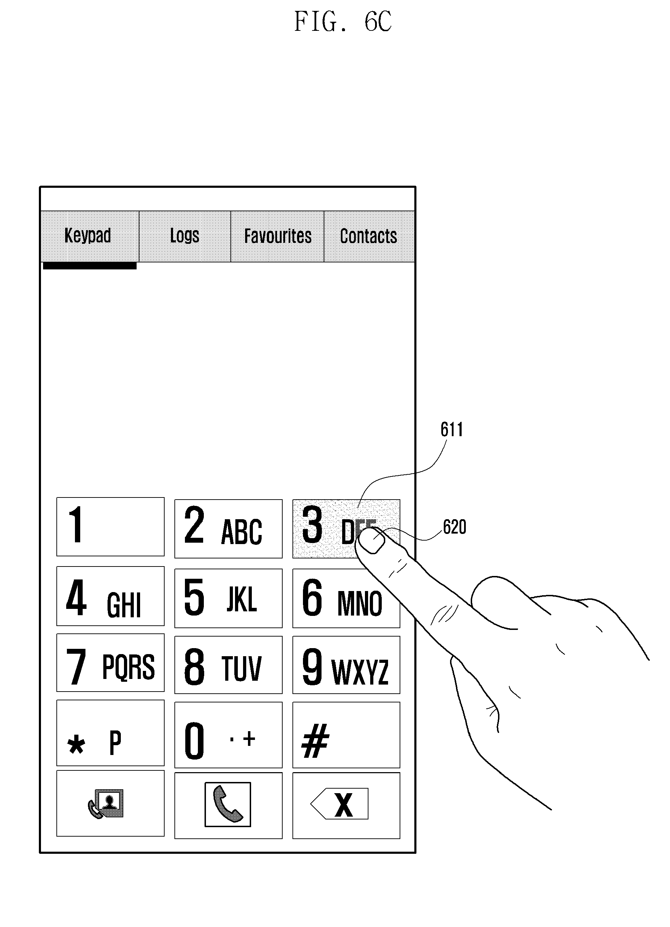

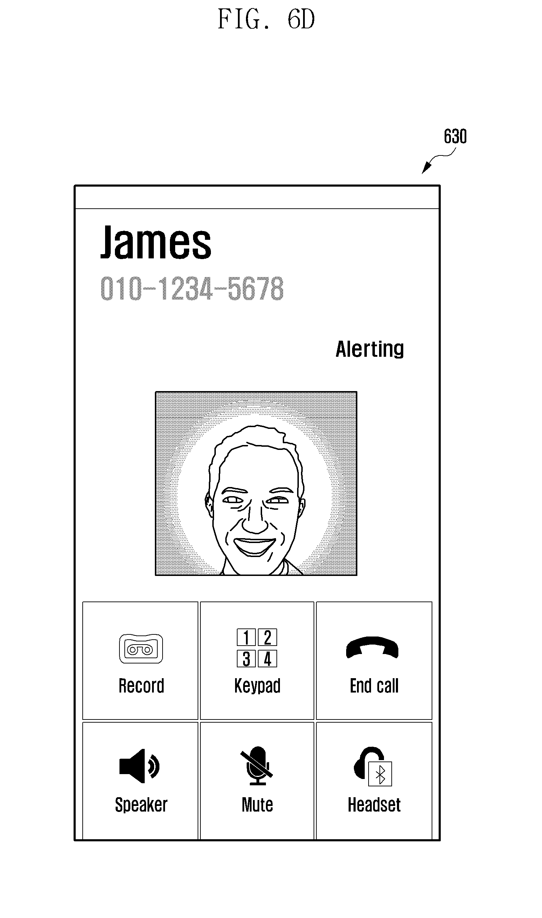

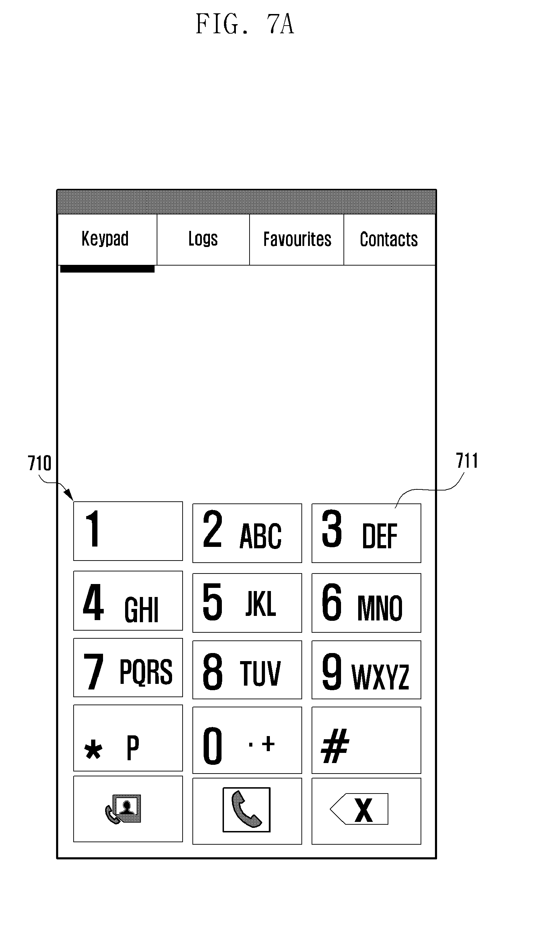

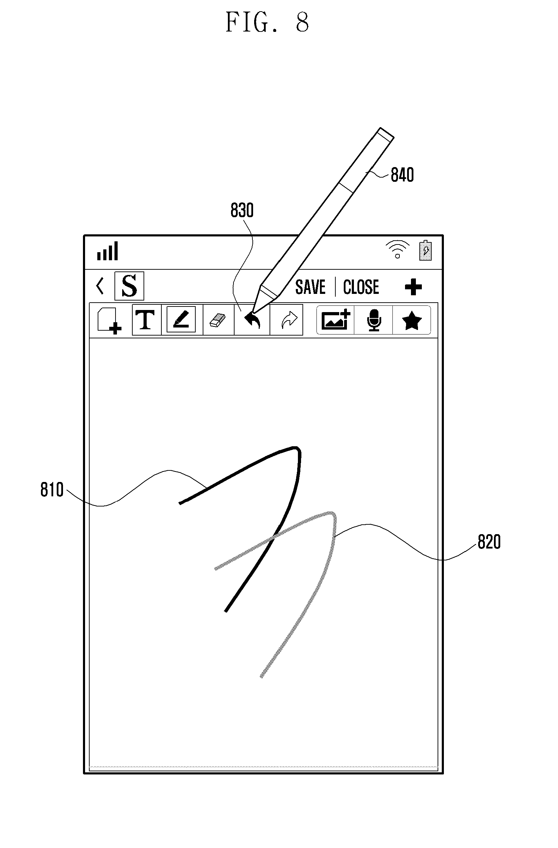

FIGS. 5A to 5C are screens illustrating an example of a method for providing a visual hint according to an embodiment of the present invention. FIGS. 6A to 6D are screens illustrating another example of a method for providing a visual hint according to an embodiment of the present invention. FIGS. 7A to 7C are screens illustrating still another example of a method for providing a visual hint according to an embodiment of the present invention. FIG. 8 is a screen illustrating still another example of a method for providing a visual hint according to an embodiment of the present invention.

Referring to FIG. 4, the controller 160 may determine whether hovering is detected at operation 410. When hovering is detected, the controller 160 may determine whether a function corresponding to the object associated with the hovering exists at operation 420. That is, the controller 160 may determine whether the object associated with the hovering is an interactive object. When the function corresponding to the object associated with the hovering exists, the controller may provide a visual hint corresponding to the function at operation 430. Otherwise, when the function corresponding to the object associated with the hovering does not exist, the controller may end processing. After providing the visual hint, the controller 160 may detect a touch gesture related to the object associated with the hovering at operation 440. The controller 160 may execute the function in response to the touch gesture at operation 450. The detailed examples of a method for providing a visual hint related to the interactive object are as follows.

Referring to FIG. 5A, the display unit 110 may display a message list 510 on a left area of a screen and may display one of the detailed contents 520 on a right area of a screen under the control of the controller 160.

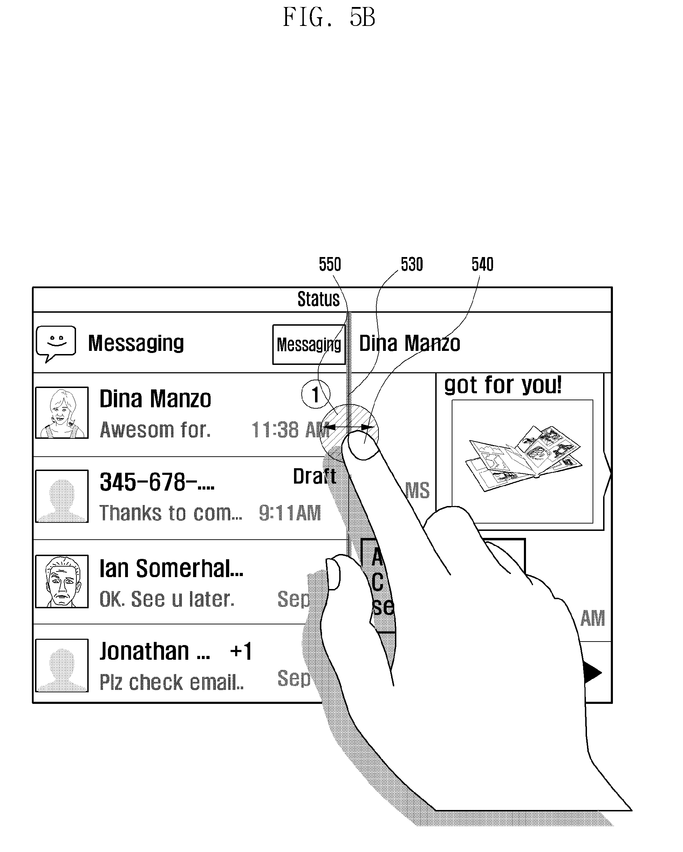

Referring to FIG. 5B, the user's index finger 540 may approach in proximity to a boundary line 530 that divides two display areas. In response to this, the touch panel 111 may generate a hovering event. The touch panel 111 may deliver the hovering event to the controller 160, and the controller 160 may recognize that the object associated with the hovering is the boundary line 530. Further, the controller 160 may determine whether a function corresponding to the boundary line 530 exists. When the function corresponding to the boundary line 530 exists, the controller 160 may provide a visual hint related to the function. For example, the display unit 110 may display a left and right arrow 550 on the boundary line 530 under the control of the controller 160. In addition, the display unit 110 may display an animation in which the left and right arrow is swayed to the left and right under the control of the controller 160. Further, the display unit 110 may display the boundary line 530 to be distinguished from other objects (i.e., a message list 510 and a detailed content 520) under the control of the controller 160. Furthermore, the display unit 110 may display the animation in which the boundary line is swayed to the left and right under the control of the controller 160. Through this visual hint, the user may recognize that the boundary line 530 is an interactive object. In addition, through this visual hint, the user may recognize the function of the boundary line 530. Meanwhile, the visual hint may include information explaining a corresponding function, and tag information tagged to the object.

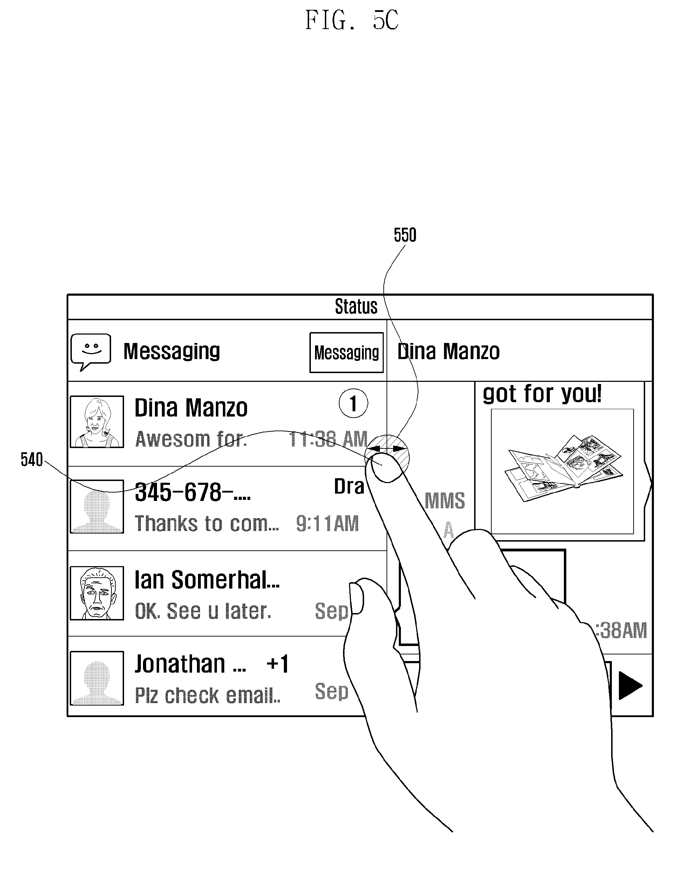

Referring to FIG. 5C, the user may touch the boundary line 530. In response to this touch, the controller 160 may provide the visual effect. For example, the display unit 110 may display the left and right arrow 550 further bolder than before the touch.

When the user touches the boundary line 530 with the index finger 540, and moves to the left or right, the controller 160 adjusts a width of two areas in response to this.

Referring to FIG. 6A, the display unit 110 may display a keypad 610 for a call on a screen under the control of the controller 160. The keypad 610 may include a key 611, which displays "3 DEF".

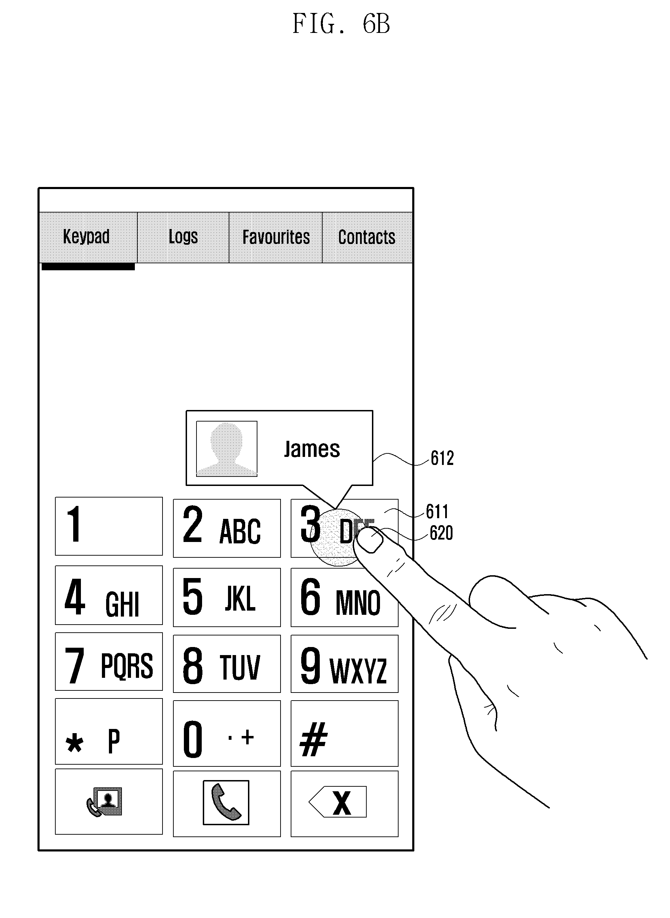

Referring to FIG. 6B, the user's index finger 620 may approach in proximity to the key 611. In response to this, the touch panel 111 may generate the hovering event. The touch panel 111 may deliver the hovering event to the controller 160, and the controller 160 may recognize that the object associated with the hovering is the key 611. In addition, the controller 160 may start a count from a time point when the hovering is recognized. When the hovering is not released from the key 611 (i.e., when the hovering related to the key 611 is maintained), the controller 160 may determine whether the count time exceeds a preset time value (e.g., 200ms). When the count time exceeds the preset time value, the controller 160 may provide a visual hint 612 related to the key 611. For example, the display unit 110 may display a name of the contact information, that is, James, mapped to the key on the key 611. Through this visual hint 612, James, the user may recognize that a speed dial of James is set as number '3'. In addition, without memorizing the speed dial and the contact number mapped to the speed dial, the user may use the speed dial through such visual hint.

Referring to FIGS. 6A to 6D, the user may touch the key 611 with the index finger 620. When the touch is maintained for a certain time (e.g., 1 sec), the controller 160 may control the wireless communication unit to attempt a phone call to James' phone number. In addition, the controller 160 may control the display unit 110 to display a call execution image 630.

Referring to FIG. 7A, the display unit 110 may display a keypad 710 for a call on the screen under the control of the controller 160. The keypad 710 may include a first key 711 in which "3DEF" is displayed.

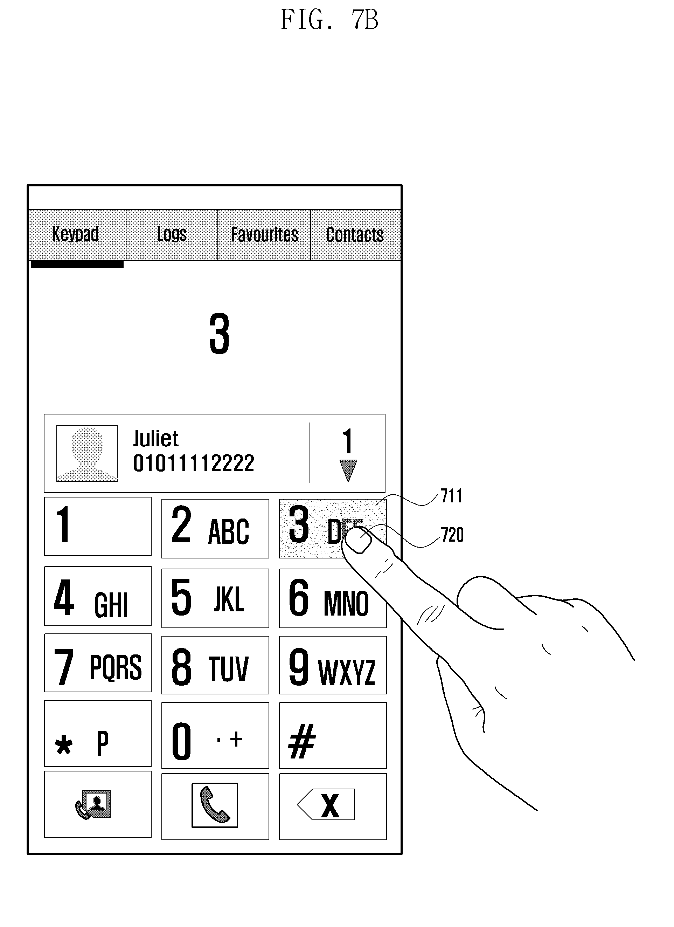

Referring to FIG. 7B, in order to verify the personal contact numbers having a speed dial number beginning with 3, the user may tap the first key 711 with the index finger 720. In response to the tap, the controller 160 may control the display unit to display number '3'.

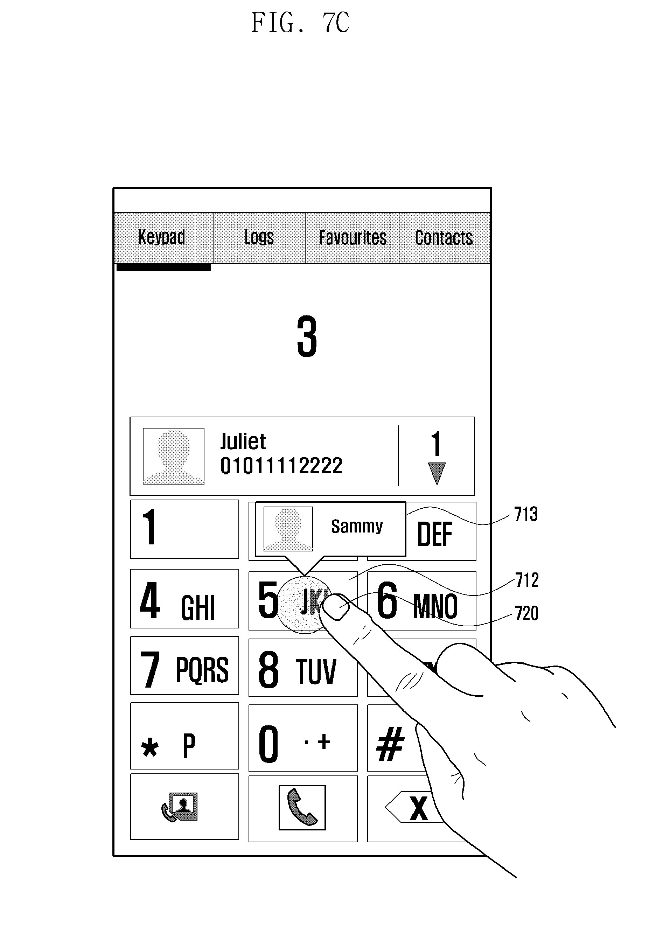

Referring to FIG. 7C, the user's the index finger 720 approaches in proximity to a second key 712 in which "5JKL" is displayed. In response to this, the touch panel 111 may generate the hovering event. The touch panel 111 may deliver the hovering event to the controller 160, and may recognize that the hovering object is a second key 712. The controller 160 may start a count from a time point when the hovering is recognized. When the hovering is not released from the key 611, the controller 160 may determine whether the count time exceeds the preset time (e.g., 200ms). When the count time exceeds the pre-set time, the controller 160 may provide the visual hint related to the first key 711 and the second key 712, that is, the speed dial, 35. For example, the display unit 110 may display the name 713 of contact information, Sammy, mapped to the speed dial, 35, on the first key 712.

The user may touch the second key 712 with the index finger 720. When the touch is maintained for a certain time (e.g., 1 sec), the controller 160 may control the wireless communication unit 140 to attempt a phone call to Sammy's phone number.

Referring to FIG. 8, the display unit 110 may display a first pen writing 810 and a second pen writing 820 on the screen under the control of the controller 160. Here, it is assumed that the first pen writing 810 has been written prior to the second pen writing 820. The user's pen 840 may approach in proximity to a return button 830. In response to this, the touch panel 111 may generate the hovering event. The touch panel 111 may deliver the hovering event to the controller 160, and the controller 160 may recognize that the object associated with the hovering is the return button 830. In addition, the controller 160 may provide the visual hint related to the return button 830. For example, the display unit 110 may display the second pen writing 820 lighter (or bolder) than the first pen writing under the control of the controller 160. In addition, the display unit 110 may display the properties (e.g., a colour, a luminosity, a brightness, or a shape, and the like) of two pen writings 810, 820 differently under the control of the controller 160. Accordingly, the user may recognize that a target of the return is the second pen writing 820. When the user taps the return button 830 with the pen 840, the controller 160 may delete the second pen writing 820 from the screen in response to the tap.

After deleting the second pen writing 820, the user's pen may approach in proximity to a repeat button. The controller 160 may provide the visual hint related to the repeat button. For example, the display unit 110 may re-display the second pen writing 820 lighter than the first pen writing under the control of the controller 160. When the user taps the repeat button with the pen, the controller 160 may re-display the second pen writing with the same luminosity as the first pen writing 810 on the screen, in response to the tap.

Meanwhile, in the above, the hint may include an auditory hint, or a tactile hint besides the visual hint.

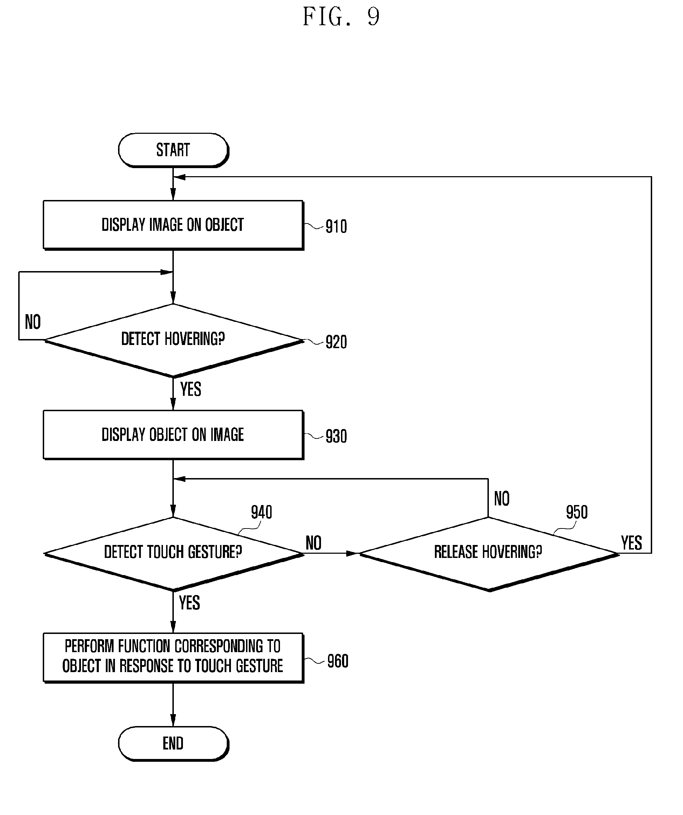

FIG. 9 is a flowchart explaining a method for providing visual information related to a hidden interactive object according to an embodiment of the present invention.

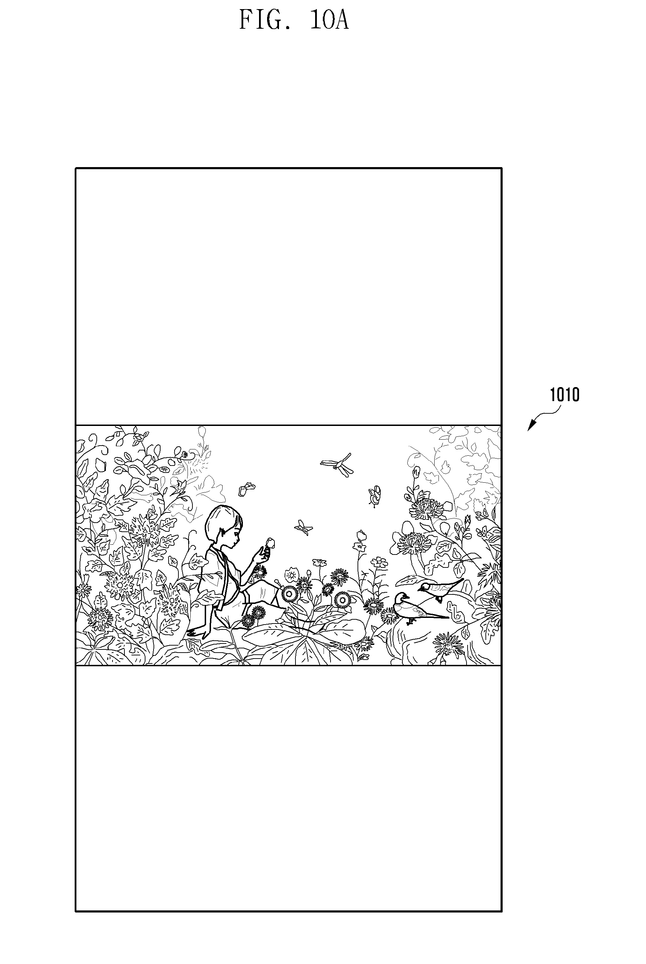

FIGS. 10A to 10C are screens explaining examples of a method for providing visual information according to an embodiment of the present invention.

The 'hidden interactive object' refers to an object that is not visible to a user, because the 'hidden interactive object' is obscured by an image overlying the object. When a display of the image overlying the object is terminated, the 'hidden interactive object' may be displayed. Here, various overlying images may include a web page, a photo, a message, a menu, and a text, and the like.

Referring to FIG. 9, the controller 160 may control the display unit 110 to display the image overlying the interactive object at operation 910. Referring to FIG. 10A, for example, the image may be an image that includes a photo 1010 and a black background.

The controller 160 may determine whether a hovering of an index finger 1010 corresponding to the hidden interactive object is detected at operation 920.

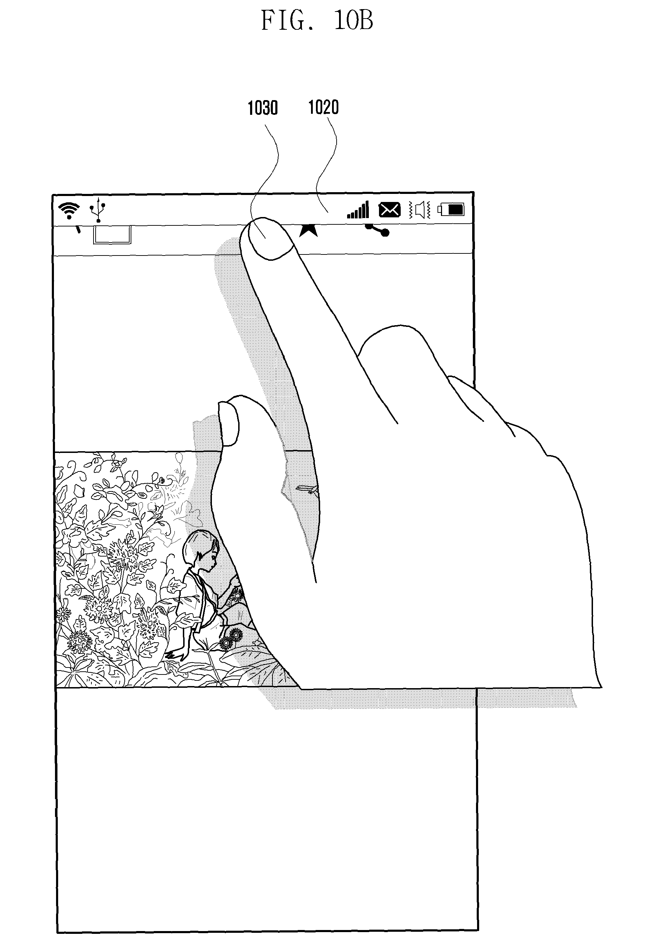

When the hovering of the index finger 1030 corresponding to the hidden interaction object is detected, the controller 160 may control the display unit 110 to display the hidden interactive object on the image at operation 930. Referring to FIG. 10B, for example, the hidden interactive object may be an indicator 1020.

After the hidden interactive object is called (i.e., displayed), the controller 160 may determine whether a touch gesture for the called object is detected at operation 940.

When the touch gesture corresponding to the called object is not detected, the controller 160 may determine whether the hovering corresponding to the called object is released at operation 950.

When the hovering corresponding to the called object is released, the process may be returned to operation 910. That is, the controller 160 may terminate a display of the called object. Otherwise, the controller 160 may determine the hovering corresponding to the called object is not released and the process may be returned to operation 940.

At operation 940, when the touch gesture related to the called object is detected, the controller 160 may perform a function related to the called object in response to the touch gesture at operation 960.

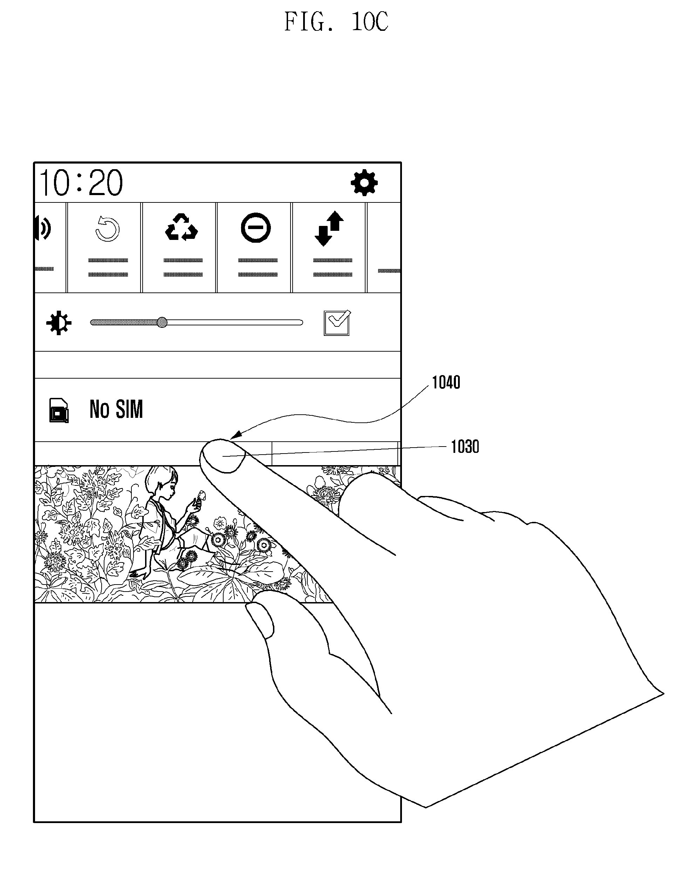

Referring to FIG. 10C, when the user touches the indicator 1040 with the index finger 1030 and drags down in such state, the controller 160 may extend an area of the indicator, in response to this touch and drag.

It will be appreciated that embodiments of the present invention can be realized in the form of hardware, software or a combination of hardware and software. Any such software may be stored in the form of volatile or non-volatile storage. In particular, the foregoing method of the present invention may be implemented in an executable program command form by various computer means and be recorded in a computer readable recording medium. In this case, the computer readable recording medium may include a program command, a data file, and a data structure individually or a combination thereof. In the meantime, the program command recorded in a recording medium may be specially designed or configured for the present invention or be known to a person having ordinary skill in a computer software field to be used. The computer readable recording medium includes Magnetic Media such as hard disk, floppy disk, or magnetic tape, Optical Media such as Compact Disc Read Only Memory (CD-ROM) or Digital Versatile Disc (DVD), MagnetoOptical Media such as floptical disk, and a hardware device such as ROM. RAM, flash memory storing and executing program commands. It will be appreciated that the storage devices and storage media are embodiments of machine-readable storage that are suitable for storing a program or programs comprising instructions that, when executed, implement embodiments of the present invention. Further, the program command includes a machine language code created by a complier and a high-level language code executable by a computer using an interpreter. The foregoing hardware device may be configured to be operated as at least one software module to perform an operation of the present invention.

Accordingly, embodiments provide a program comprising code for implementing apparatus or a method as claimed in any one of the claims of this specification and a machine-readable storage storing such a program. Still further, such programs may be conveyed electronically via any medium, for example a communication signal carried over a wired or wireless connection and embodiments suitably encompass the same.

It will be appreciated from the following description that, in certain embodiments of the invention, features concerning the graphic design of user interfaces are combined with interaction steps or means to achieve a technical effect.

It will be appreciated from the following description that, in certain embodiments of the invention, graphic features concerning technical information (e.g. internal machine states) are utilised to achieve a technical effect.

Certain embodiments aim to achieve the technical effect of enhancing the precision of an input device.

Certain embodiments aim to achieve the technical effect of lowering a burden (e.g. a cognitive, operative, operational, operating, or manipulative burden) of a user when performing certain computer or device interactions.

Certain embodiments aim to achieve the technical effect of providing a more efficient man-machine (user-machine) interface.

While the present invention has been shown and described with reference to various embodiments thereof, it will be understood by those skilled in the art that various changes in form and details may be made therein without departing from the scope of the present invention as defined by the appended claims.

## Claims

1. A method for providing feedback in a terminal including a touch panel installed on a screen, the method comprising:
displaying an object on the screen or displaying an image overlying the object;
detecting hovering of a touch input means, the hovering being associated with the object; and
providing visual feedback in response to the hovering;
wherein when an object is displayed on the screen the visual feedback corresponds to a distance between the object and the touch input means or a function corresponding to the object; or
wherein when an image is displayed overlying the object the visual feedback comprises displaying the object on the image.

2. The method of claim 1, wherein when the visual feedback corresponds to a distance between the object and the touch input means, providing visual feedback comprises:
displaying the object associated with the hovering distinguished from another object;
displaying a property of the object associated with the hovering differently according to a depth value; or
displaying the object associated with the hovering bolder as a distance between the object and the touch input means gets closer.

3. The method of claim 2, wherein the property includes at least one of luminosity, colour, brightness, size, and shape.

4. The method of any one of the preceding claims, further comprising;
providing one or more of auditory feedback or tactile feedback in response to the hovering.

5. The method of any one of the preceding claims, wherein when the visual feedback relates to a function corresponding to the object, providing visual feedback comprises:
displaying an animation related to the function;
displaying contact information mapped to a number key when the object is the number key; or
displaying pen writings that are distinguished when the object is a return button or a repeat button.

6. The method of claim 5, wherein displaying an animation related to the function comprises:
displaying an animation in which a boundary line is swayed when the object is the boundary line that divides two display areas.

7. The method of any one of the preceding claims, wherein when an image is displayed overlying the object, method further comprises:
detecting a touch gesture of the touch input means corresponding to the object in a state in which the object is displayed on the image; and
performing a function associated with the object in response to the touch gesture.

8. The method of claim 7, performing a function of the object comprises:
extending and displaying an area of an indicator when the object is the indicator.

9. A terminal comprising:
a display unit having a screen configured to display an object or an image overlying the object;
a touch panel installed on the screen; and
a controller configured to control the display unit and the touch panel;
wherein the controller is configured to:
control the touch panel to detect hovering of a touch input means, the hovering being associated with the object; and
provide visual feedback in response to the hovering;
wherein when an object is displayed on the screen the visual feedback corresponds to a distance between the object and the touch input means or a function corresponding to the object; or
wherein when an image is displayed overlying the object the visual feedback comprises displaying the object on the image.

10. The terminal of claim 9, wherein when the visual feedback corresponds to a distance between the object and the touch input means, the controller is further configured to providing visual feedback by:
displaying the object associated with the hovering distinguished from another object;
displaying a property of the object associated with the hovering differently according to a depth value; or
displaying the object associated with the hovering bolder as a distance between the object and the touch input means gets closer.

11. The terminal of claim 9 or 10, wherein when the visual feedback relates to a function corresponding to the object, the controller is further configured to provide visual feedback by:
displaying an animation related to the function;
displaying contact information mapped to a number key when the object is the number key; or
displaying pen writings that are distinguished when the object is a return button or a repeat button..

12. The terminal of any one of claims 9 to 11, wherein the controller is further configured to detect a touch gesture of the touch input means corresponding to the object in a state in which the object is displayed on the image; and
perform a function associated with the object in response to the touch gesture.

13. The terminal of claim 12, wherein the controller is configured to perform a function of extending and displaying an area of an indicator when the object is the indicator.

14. The terminal of any one of claims 9 to 13, wherein the controller is further configured to display the object on the image in response to the hovering such that the object changes in an appearance corresponding to a distance of one of a finger, stylus and pen from the touch panel.

15. The method or terminal of any one of the preceding claims, wherein the touch input means comprises at least one of a finger, a capacitive touch pen, and an electromagnetic touch pen.
